Europäisches Patentamt

European Patent Office

Office européen des brevets

(19)

(11) Numéro de publication: **0 231 681 B1**

## (12) FASCICULE DE BREVET EUROPEEN

(45) Date de publication de fascicule du brevet:
06.11.91

(51) Int. Cl.⁵: $C02F\ 3/28$

(21) Numéro de dépôt: **86402690.1**

(22) Date de dépôt: **04.12.86**

(54) **Perfectionnements apportés aux installations et aux procédés d'épuration biologique des eaux résiduaires et notamment des eaux usées urbaines.**

(30) Priorité: **05.12.85 FR 8517996**

(43) Date de publication de la demande:
**12.08.87 Bulletin 87/33**

(45) Mention de la délivrance du brevet:
**06.11.91 Bulletin 91/45**

(84) Etats contractants désignés:
**AT BE CH DE ES FR GB GR IT LI LU NL SE**

(56) Documents cités:
**EP-A- 0 090 450**
**FR-A- 2 447 350**
**US-A- 3 933 628**
**US-A- 4 100 023**
**US-A- 4 303 350**

(73) Titulaire: **BERTIN & CIE**
**Zone Industrielle Boîte postale 3**
**F-78373 Plaisir Cédex(FR)**

(72) Inventeur: **Raymond, Bernard**
**Chemin de Catoy**
**F-40440 Ondres(FR)**
Inventeur: **Zuffi, Odile**
**Rue d'Hardoy**
**F-64600 Anglet(FR)**
Inventeur: **Milande, Nicolas**
**Résidence Cantegrit**
**Avenue de Verdun F-40130 Capbreton(FR)**

(74) Mandataire: **Orès, Bernard et al**
**Cabinet ORES 6, Avenue de Messine**
**F-75008 Paris(FR)**

## Description

La présente invention est relative à des perfectionnements apportés aux installations et aux procédés d'épuration biologique des eaux résiduaires et notamment des eaux usées urbaines.

Les charges polluantes minérales et surtout organiques déversées actuellement atteignent une valeur telle que les microorganismes présents dans le milieu ne peuvent plus réaliser, comme par le passé, une auto-épuration valable.

Aussi, ces dernières années, on a étudié et préconisé différents traitements faisant appel soit à des procédés aérobies comme le lagunage, les bornes activées, les lits bactériens, soit à des procédés anaérobies comme la digestion des boues. Ces installations et procédés conviennent parfaitement pour des agglomérations et complexes industriels "fixes", c'est-à-dire ceux ayant un débit en eaux usées plus ou moins régulier tout le long de l'année. Mais ils sont totalement inadaptés quand le volume des eaux à traiter augmente brutalement, comme c'est le cas par exemple pour les communes de la frange littorale de la France qui accueillent chaque année durant la saison estivale une population de vacanciers qui, dans certains cas, peut multiplier par dix le nombre de la population locale. C'est ainsi que pour les stations d'épuration deux cas se présentent :

1°) ou bien la station est dimensionnée sur la base de la charge "hors saison", ce qui a pour conséquence une surcharge néfaste au bon fonctionnement des installations et conduit à une baisse dangereuse de la qualité de l'eau traitée ;

2°) ou bien la station est dimensionnée sur la base de la population maximale raccordée, ce qui a pour effet :

a) dans le cas d'une installation aérobie : un surcoût considérable tant à l'investissement qu'à l'exploitation, sans garantir pour autant un fonctionnement optimal.

b) dans le cas d'une installation anaérobie : un très mauvais fonctionnement, car les eaux saisonières sont à basse teneur en DCO ( $\leq$ 5 g/l) et le procédé anaérobie classique ne fonctionne correctement que pour les effluents concentrés ($\geq$ 10 g/l en DCO) et à des températures de l'ordre de 35-40°C.

Or, pour maintenir la température dans cette zone, la chaleur dégagée par les réactions anaérobies n'est pas suffisante, et il est nécessaire de munir la station de dispositifs d'isolation et/ou de chauffage.

Le Brevet américain US-A-4 100 023 décrit également un dispositif pour produire, à partir de matières organiques, du gaz utilisable et du liquide fertilisant. Dans ce dispositif, la chambre de réaction où a lieu la digestion anaérobie des matières organiques est munie de moyens de chauffage assurant le maintien de la température nécessaire au déroulement des réactions anaérobies.

La présente invention s'est par conséquent donné pour but de fournir une installation d'épuration des eaux résiduaires qui répond mieux aux nécessités de la pratique que les installations visant au même but antérieurement connues, notamment en ce qu'elle est très économique et parfaitement adaptée pour des épurations durant les périodes de pointe, en ce qu'elle ne nécessite que de faibles frais d'investissement et de fonctionnement, car elle utilise un procédé anaérobie capable de réduire à la température ambiante (15-25°C) la majeure partie de la charge entrante.

La présente invention a pour objet une installation d'épuration biologique ambiante des eaux usées et notamment des eaux usées urbaines, comprenant une ou plusieurs lagunes anaérobies à lit de boues disposé au fond, la ou lesdites lagunes étant rendues étanche(s) par la pose d'une surface ou membrane imperméable synthétique, et pourvue(s) de conduites d'évacuation des gaz, de purges de boues et de sorties d'eau traitée, vers les lagunes d'infiltration notamment, et d'instruments de mesure et de contrôle, ladite installation étant caractérisée en ce qu'elle permet l'épuration des eaux usées à température ambiante, et en ce que chaque lagune anaérobie est pourvue :

- d'un réseau de distribution de l'effluent à traiter posé au fond de ladite lagune ;
- d'une couverture étanche à l'eau et au gaz, posée sur une armature de soutien et prenant appui dans les caniveaux d'une ceinture d'étanchéité hydraulique entourant ladite lagune.

Selon un mode de réalisation avantageux de l'objet de l'invention, le réseau de distribution installé en fond de lagune est un réseau subdivisé et notamment dichotomique fixé sur des barres d'acier ou de ciment ou analogues et perforé de trous alignés selon l'axe du tube en point bas.

L'alimentation d'une installation de traitement des eaux par un réseau de distribution a été proposé dans l'Art antérieur ; la Demande de Brevet Européen EP-A-0 090 450 décrit l'utilisation d'un réseau de distribution dans un réacteur à lit bactérien fluidisé : ce réseau a pour fonction de créer au sein du réacteur un effet de turbulence qui permet le maintien en suspension des particules qui constituent le lit bactérien.

Dans le cadre de la présente invention, le réseau de distribution remplit une fonction totalement différente, qui est de permettre :

a) une distribution étagée garantissant une répartition la plus uniforme possible ;

b) une augmentation du temps de contact entre le liquide à traiter et le lit de boues.

Les barres en acier ou en ciment (ou analogues) assurent d'une part le lest, et, d'autre part le support.

Conformément à l'invention, le lit de boues occupe environ un tiers de la hauteur de la lagune, une légère pente étant aménagée en fond des bassins facilitant la purge ou le soutirage éventuel de boues.

Selon un mode de réalisation avantageux de l'installation conforme à l'invention, le fond et les parois des caniveaux de la ceinture hydraulique sont rendus étanches par la pose d'une membrane imperméable synthétique.

Selon un autre mode de réalisation avantageux de l'installation conforme à la présente invention, la membrane imperméable synthétique recouvrant la lagune et/ou les caniveaux de la ceinture hydraulique repose sur un feutre antipoinçonnant de protection.

Selon un autre mode de réalisation avantageux de l'objet de l'invention, la couverture étanche à l'eau et au gaz de la lagune est ignifugée, rendue résistante aux intempéries et traitée anti-UV.

La présente invention est également relative à un procédé d'épuration biologique des eaux usées, caractérisé en ce qu'il est conduit à température ambiante, en ce qu'il utilise l'installation selon la revendication 1 et en ce qu'il comprend :

- une première étape de prélèvement de l'effluent à traiter dans un bassin de prétraitement ;
- une deuxième étape dans laquelle on répartit l'effluent à l'aide du réseau de distribution, en fond de lagune, dans la partie basse du lit de boues,
- une troisième étape dans laquelle l'effluent circule de bas en haut, à travers le lit de boues, à une vitesse ascensionnelle qui est déterminée en fonction de sa teneur en DBO,
- une quatrième étape dans laquelle l'effluent est évacué par des trop-pleins situés en haut de la lagune.

Selon un mode de réalisation avantageux du procédé objet de la présente invention, l'effluent épuré peut subir, si nécessaire, un traitement tertiaire de finition dans des lagunes d'infiltration pour le débarrasser des matières en suspension et de la DBO restante.

L'invention sera mieux comprise par la description qui suit faite à titre d'exemple et en référence aux dessins annexés dans lesquels :

- La figure 1 est une vue partielle de la lagune vide contenant au fond le réseau de distribution de l'effluent à traiter.
- Les figures 2a et 2b représentent deux schémas différents de répartition de drains permettant l'alimentation de la lagune.

- La figure 3 est une vue schématique en élévation de l'ensemble de l'installation de traitement.

Il doit être bien entendu, toutefois, que l'installation décrite dans ce qui va suivre et représenté sur les dessins est donnée uniquement à titre d'illustration de l'objet de l'invention, mais n'en constitue en aucune manière une limitation.

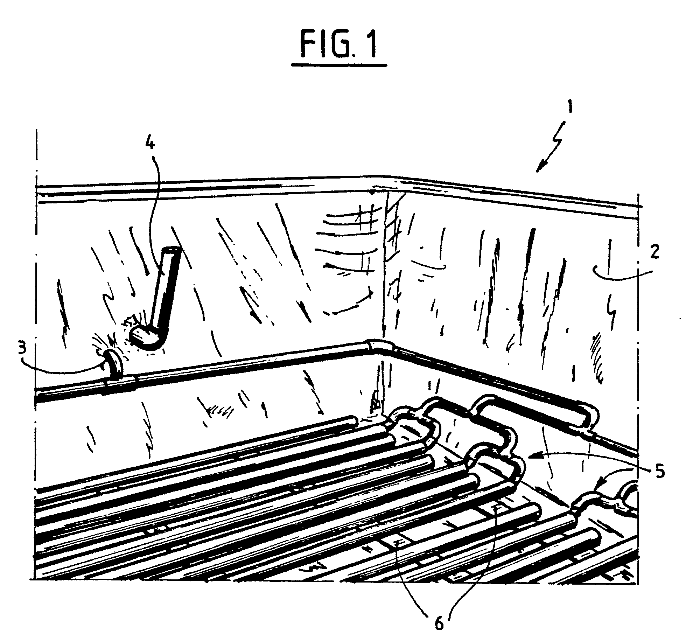

On se réfère d'abord à la figure 1 qui représente une vue partielle de la lagune 1, laquelle se présente d'une manière générale, mais non limitative, sous la forme d'une fosse à une géométrie de pyramide tronquée, inversée.

De part et d'autre de cette lagune 1, un remblai ou talus (non représenté sur la figure) est mis en place et consolidé. L'étanchéité latérale et inférieure de la lagune 1 est assurée par la mise en place d'un film plastifié 2 par exemple en PVC. L'assemblage des éléments constituant cette membrane étanche est réalisé en usine par soudure haute fréquence, par exemple. Cette membrane repose en général et d'une manière préférentielle sur un feutre anti-poinçonnant. A environ mi-hauteur de l'ouvrage traversant le talus débouche dans la lagune 1 la canalisation 3 d'amenée des effluents à traiter. Après le perçage de la bâche 2 l'étanchéité est assurée par une collerette cerclée, la canalisation 3, comme d'ailleurs les trop-pleins 4, (quatre trop-pleins à raison d'un par côté) repose sur un support en béton lissé, appliqué sur la paroi intérieure de la lagune. Le réseau de distribution 5 (en PVC pression, par exemple) est installé en fond de lagune fixé sur des barres 6 en acier par exemple qui assurent d' une part le lest et d'autre part le support. Ce reseau 5 de drains est perforé de trous (par exemple un trou tous les 30 cm) alignés selon l'axe du tube au point bas.

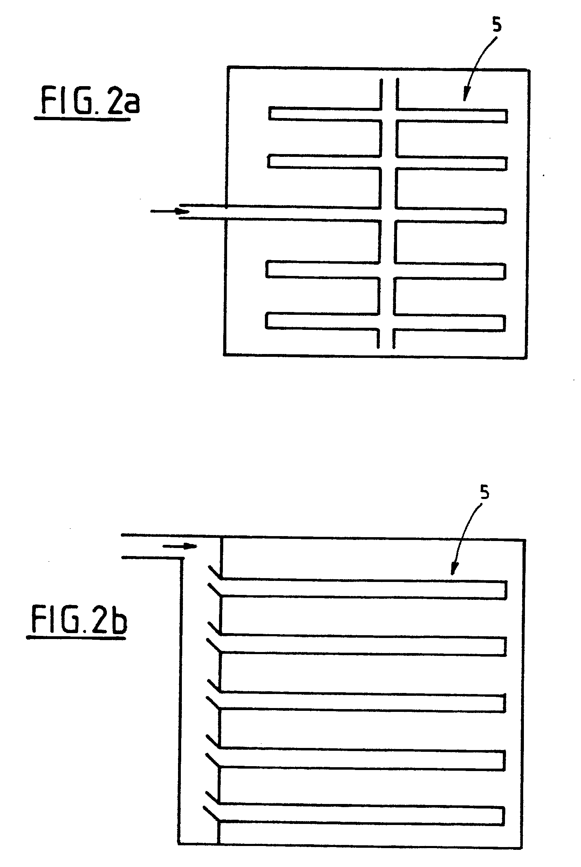

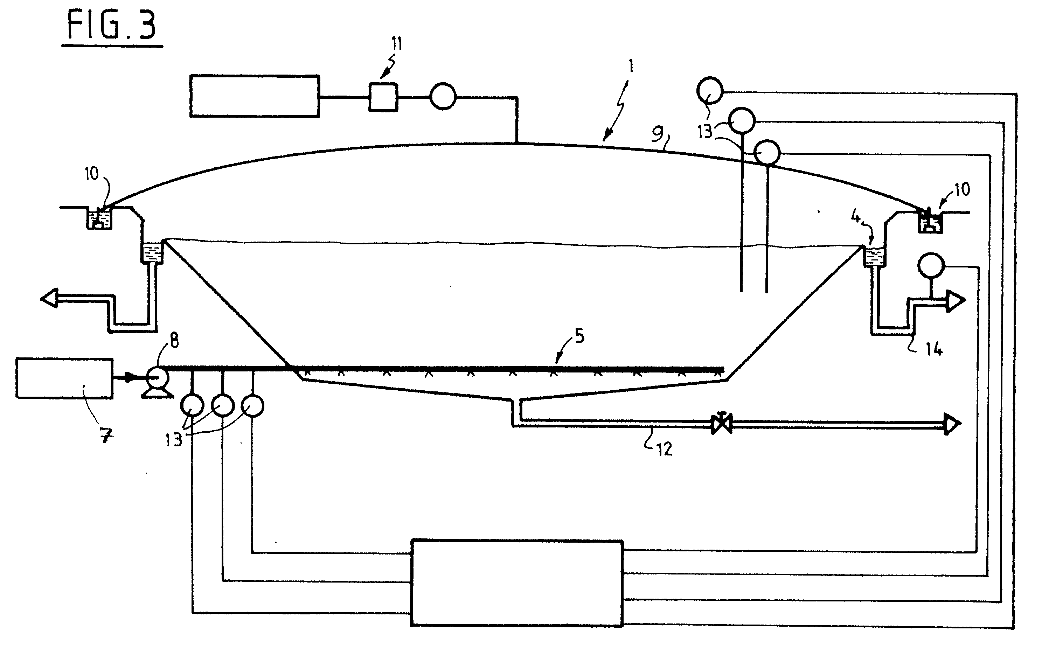

Ce reseau étagé peut se présenter sous différentes formes comme par exemple celles représentées sur la figure 2. Ces formes garantissent une répartition la plus uniforme possible. Le fonctionnement de l'installation est parfaitement illustré à l'aide de la figure 3 qui représente une vue schématique de l'ensemble de l'installation.

L'effluent à traiter arrive par exemple à l'aide d'une pompe 8 en provenance d' un bassin de prétraitement 7. La pompe 8 mise en place est de préférence de type immergé. L'installation d'un by-pass sur la canalisation de refoulement permet de moduler le débit d'alimentation de l'installation. Le liquide est distribué à l'aide du réseau 5 dans la partie basse du lit de boues qu'il traverse pour être évacué par les canalisations de sortie 14 et trop-plein 4, lesquels se terminent par un siphon pour maintenir une garde hydraulique.

La partie aérienne de la lagune 1 est surmontée d'une couverture étanche 9 (en polyester par exemple) supportée par une armature métallique, elle-même reposant dans le caniveau périphérique 10 formant ceinture hydraulique. Le caniveau de ceinture 10 formant le joint hydraulique est également comme la lagune, imperméabilisé. Il est encastré à environ 45 cm du bord extérieur de la lagune 1, il mesure environ 35 cm de largeur et 40 cm de profondeur et est constitué d'éléments en béton préfabriqués, assemblés par des joints sur place.

Rempli d'eau, ce caniveau reçoit et supporte les piliers de la charpente, ainsi que la bavette de la couverture supérieure 9. Celle-ci y est fixée par laçage sur une lisse immergée. Ce joint d'eau a pour but de maintenir l'étanchéité au gaz.

La couverture 9 étanche à l'eau et aux gaz ignifugée, résistante aux intempéries et traitée anti-UV est assemblée en usine et montée en forme sous l'ossature. Sa fixation est assurée par laçage sur des tubulures longitudinales et transversales de l'ossature.

Le gaz produit est évacué à l'aide d'une conduite 11 (soit vers un réservoir, soit dispersé dans l'atmosphère, soit encore vers une torchère). Les boues sont évacuées à l'aide de la conduite 12. En plus de cette purge en pied de lagune, plusieurs autres points de prélèvement à hauteurs différentes peuvent équiper l'installation. Ces points de prélèvement sont en général constitués de cannes plongeantes (en PVC) munies de clapet anti-retour, ces piquages étant reliés par un jeu de vannes à une pompe d'extraction.

Divers instruments de mesure 13 (thermomètre, sonde pH, débimètre, sonde rédox, manomètre, etc...) complètent l'installation.

## EXEMPLES DE REALISATION

### Exemple 1

Lagune: Pyramide tronquée, inversée.

Au sol une petite base carrée de 25 m², en tête du bassin la grande base de 92 m².

Hauteur totale au-dessus du sol : 2,3 m.

Hauteur utile : 2 m

De part et d'autre de cette lagune, un remblai est mis en place et consolidé. Sa hauteur est de 2,3 m, sa pente externe est de 45°, sa largeur en tête de 1 m (répartie en 0,2 m-0,35 m de caniveau hydraulique + 0,45 m), sa largeur en pied de 5 m.

L'étanchéité latérale et inférieure est assurée par la mise en place d'un film PVC plastifié 5/10 mm, traité anti-UV de marque "GRILTEX". L'assemblage des éléments constituent cette membrane, aux dimensions totales de 15,4X14,8 m est réalisé par soudure haute fréquence. Elle repose sur un feutre anti-poinçonnant de protection 280 g/m².

Caniveaux périphériques :

Ils sont formés d'éléments en béton préfabriqués, assemblés sur le pourtour haut de la lagune et encastrés dans le talus à 45 cm du bord extérieur. La hauteur est de 0,4 m, la largeur de 0,35 m, l'épaisseur de 0,06 m et la longueur totale de 41 m.

Conduites :

Les conduites d'amenée de liquide, de distribution de liquide et de vidange sont en PVC pression.

Volume journalier d'effluents traités : 280 m³

Charge polluante traitée : 100 Kg DBO$_5$ par jour.

## EXEMPLE 2

Volume journalier traité : 4000 m³

Nombre de lagunes : 2

Surface au sol de 2 lagunes : 160 m²

Volume de 2 lagunes : 1150 m³

Charge polluante traitée : 1200 kg DBO par jour

Concentration moyenne : 300 mg/l DBO

Abattement de la pollution : 90 % compté sur DBO

Abattement sur les matières en suspension : 90 %

Vitesse ascensionnelle moyenne : 0,6 m/h

Il résulte de la description qui précède que quels que soient les modes de mise en oeuvre, de réalisation et d'application adoptés, l'on obtient des installations d'épuration biologique des eaux usées qui présentent par rapport aux installations visant au même but antérieurement connues des avantages importants, dont certains ont déjà été mentionnés dans ce qui précède, et notamment :

- l'avantage d'une installation "légère", économique, d'un entretien et fonctionnement faciles ;
- l'avantage d'une mise en place rapide ;
- l'avantage d'exploitation très économique (pas d'agitation, pas d'oxygénation, production des boues environ dix fois inférieure à celle d'un traitement aéré classique) ;
- l'avantage de suppression des nuisances telles qu'odeurs et bruit.

## Revendications

1. Installation d'épuration biologique des eaux usées à température ambiante et notamment des eaux usées urbaines, comprenant une ou plusieurs lagunes anaérobies à lit de boues disposé au fond, la ou lesdites lagunes étant rendues étanche(s) par la pose d'une surface ou membrane imperméable synthétique, et pourvue(s) de conduites d'évacuation des gaz, de purges de boues et de sorties d'eau traitée, vers les lagunes d'infiltration notamment, et d'instruments de mesure et de contrôle, ladite installation étant caractérisée en ce que chaque lagune anaérobie est pourvue :

- d'un réseau de distribution de l'effluent à traiter posé au fond de ladite lagune,
- d'une couverture étanche à l'eau et au gaz, posée sur une armature de soutien et prenant appui dans les caniveaux d'une ceinture d'étanchéité hydraulique entourant ladite lagune.

2. Installation selon la revendication 1, caractérisée en ce que le réseau de distribution installé en fond de lagune est un réseau subsivisé et notamment dichotomique fixé sur des barres d'acier ou de ciment, ou analogues et perforé de trous alignés selon l'axe du tube au point bas.

3. Installation selon la revendication 1, caractérisée en ce que le lit de boues occupe environ un tiers de la hauteur de la lagune, une légère pente étant aménagée au fond des bassins facilitant la purge ou le soutirage éventuel de boues.

4. Installation selon la Revendication 1, caractérisé en ce que le fond et les parois des caniveaux de la ceinture hydraulique sont rendus étanches par la pose d'une membrane imperméable synthétique.

5. Installation selon la revendication 1, caractérisée en ce que la membrane imperméable synthétique recouvrant la lagune et/ou les caniveaux de la ceinture hydraulique repose sur un feutre anti-poinçonnant de protection.

6. Installation selon la revendication 1, caractérisée en ce que la couverture étanche à l'eau et au gaz de la lagune est ignifugée, rendue résistante aux intempéries et traitée anti-UV.

7. Procédé d'épuration biologique des eaux usées, caractérisé en ce qu'il est conduit à température ambiante, en ce qu'il utilise l'installation selon une quelconque des revendications 1 à 6 et en ce qu'il comprend :
- une première étape de prélèvement de l'effluent à traiter dans un bassin de prétraitement ;
- une deuxième étape dans laquelle on répartit l'effluent à l'aide du réseau de distribution, en fond de lagune, dans la partie basse du lit de boues,
- une troisième étape dans laquelle l'effluent circule de bas en haut, à travers le lit de boues, à une vitesse ascensionnelle qui est déterminée en fonction de sa teneur en DBO,
- une quatrième étape dans laquelle l'effluent est évacué par des trop-pleins situés en haut de la lagune.

8. Procédé selon la revendication 7, caractérisé en ce que l'effluent épuré subit un traitement tertiaire de finition dans des lagunes d'infiltration pour le débarrasser des matières en suspension et de la DBO restante.

**Claims**

1. Biological waste water purification installation at ambient temperature, and especially of urban waste water, comprising one or more anaerobic ponds with sludge beds placed at the bottom, the said pond or ponds being made watertight by the placing of a synthetic impermeable surface or membrane, and provided with gas discharge conduits, sludge drains and treated water outlets, towards infiltration ponds in particular, and with measurement and control instruments, the said installation being characterized in that each anaerobic pond is provided with:
   * a distribution network for the effluent to be treated placed on the bottom of the said pond,
   * a watertight and gastight cover placed on a support armature bearing in the trenches of a watertight belt surrounding the said Pond

2. Installation according to Claim 1, characterized in that the distribution network installed on the bottom of the pond is a subdivided and especially dichotomic network fixed on steel, cement or similar bars, and perforated with holes aligned with the bottom axis of the tube.

3. Installation according to Claim 1, characterized in that the sludge bed occupies about one-third of the height of the pond, a slight slope being provided at the bottom of the basins to facilitate subsequent drainage or withdrawal of the sludges.

4. Installation according to Claim 1, characterized in that the bottom and the walls of the trenches of the hydraulic belt are made watertight by the placement of a synthetic impermeable membrane.

5. Installation according to Claim 1, characterized in that the synthetic impermeable membrane covering the pond and/or the trenches of the hydraulic belt lie on a penetration-proof protective felt.

6. Installation according to Claim 1, characterized in that the watertight and gastight cover of the pond is thermally insulated, made weather-resistant and treated anti-UV.

7. Biological waste water purification process characterized in that it is conducted at ambient temperature, in that it uses the installation according to any one of Claims 1 to 6, and in that it comprises:
   - a first step of sampling of the effluent to be treated in a pretreatment basin,
   - a second step in which the effluent is distributed by means of the distribution network, at the bottom of the pond, in the bottom part of the sludge bed,
   - a third step in which the effluent flows from the bottom upward, through the sludge bed, at an upward speed which is determined as a function of its DBO content,
   - a fourth step in which the effluent is discharged through overflows located at the top of the pond.

8. Process according to Claim 7, characterized in that the purified effluent undergoes tertiary finishing treatment in infiltration ponds to rid it of suspended matter and of the remaining DBO.

**Patentansprüche**

1. Biologische Reinigungsanlage von Abwässern und insbesondere von städtischen Abwässern, die bei Umgebungstemperatur arbeitet, die eine oder mehrere anaerobe Becken mit an dem Boden angeordnetem Schlammbett aufweist, wobei das oder die Becken durch das Anbringen einer Oberfläche oder einer synthetischen undurchlässigen Membran abgedichtet ist (sind) und insbesondere mit Abgas-, Schlammablaßleitungen und mit Abflußleitungen für behandeltes Wasser zu den Infiltrationsbecken und mit Meß- und Kontrollinstrumenten versehen ist (sind), wobei die Anlage dadurch gekennzeichnet, daß jedes anaerobe Becken mit folgenden versehen ist:
   - mit einem an dem Boden des Beckens angebrachten Verteilungsnetz für das zu behandelnde Abwasser,
   - mit einer für das Wasser und für das Gas dichten Abdeckung, die auf einer Stützverstärkung angebracht ist und sich in dem Schwemmkanälen eines hydraulischen Dichtungsringes abstützt, welcher das Becken umgibt.

2. Anlage nach Anspruch 1 dadurch gekennzeichnet, daß das an dem Beckenboden installierte Verteilungsnetz ein unterteiltes Netz und insbesondere dichotomisch ist, das auf Stahl- oder Betonschienen oder ähnlichem befestigt ist und mit entsprechend der Achse des Rohrs an dem Tiefpunkt ausgerichteten Öffnungen durchbohrt ist.

3. Anlage nach Anspruch 1, dadurch gekennzeichnet, daß das Schlammbett ungefähr ein Drittel der Höhe des Beckens belegt, wobei eine leichte Neigung an dem Boden des Beckens ausgebildet ist, welche den Ablaß oder das etwaige Abstechen von Schlamm erleichtert.

4. Anlage nach Anspruch 1, dadurch gekennzeichnet, daß der Boden und die Wände der Schwemmkanäle des hydraulischen Ringes durch Anbringen einer synthetischen undurchlässigen Membran abgedichtet sind.

5. Anlage nach Anspruch 1, dadurch gekennzeichnet, daß die synthetische undurchlässige Membran, welche das Becken und/oder die Schwemmkanäle des hydraulischen Ringes bedeckt, auf einem perforierungsfreien Schutzfilz liegt.

6. Anlage nach Anspruch 1, dadurch gekennzeichnet, daß die für das Wasser und für das Gas dichte Bedeckung des Beckens feuersicher, wetterbeständig und UV-beständig behandelt ist.

7. Verfahren zum biologischen Reinigen von Abwässern dadurch gekennzeichnet, daß dieses bei Umgebungstemperatur durchgeführt wird, daß bei diesem die Anlage nach irgendeinem der Ansprüche 1 bis 6 verwendet wird und daß dieses umfaßt:
   - einen ersten Schritt des Ableitens des zu behandelnden Abwassers in ein Vorbehandlungsbecken,
   - einen zweiten Schritt, bei welchem das Abwasser mit Hilfe des Verteilungsnetzes an dem Boden des Beckens in den unteren Teil des Schlammbettes verteilt wird,
   - einen dritten Schritt, bei welchem das Abwasser von unten nach oben durch das Schlammbett mit einer ansteigenden Geschwindigkeit zirkuliert, die in Abhängigkeit von seinem Gehalt in DBO (biochemischer Sauerstoffbedarf) bestimmt ist,
   - einen vierten Schritt, bei welchem das Abwasser durch Überläufe abgeleitet wird, die auf dem Becken oben gelegen sind.

8. Verfahren nach Anspruch 7, dadurch gekennzeichnet, daß das gereinigte Abwasser einer dritten Endbehandlung in den Infiltrationsbecken unterworfen wird, um Materialien in Suspension und den übrigbleibenden DBO zu beseitigen.

# FIG. 1

FIG.2a

FIG.2b

FIG.3

EP 0 231 681 B1